(19) Europäisches Patentamt
European Patent Office
Office européen des brevets

(11) EP 3 412 359 A1

(12) EUROPEAN PATENT APPLICATION

(43) Date of publication:
12.12.2018 Bulletin 2018/50

(51) Int Cl.:
B01D 65/08 $^{(2006.01)}$    C02F 3/12 $^{(2006.01)}$

(21) Application number: 18175597.6

(22) Date of filing: 01.06.2018

(84) Designated Contracting States:
AL AT BE BG CH CY CZ DE DK EE ES FI FR GB GR HR HU IE IS IT LI LT LU LV MC MK MT NL NO PL PT RO RS SE SI SK SM TR
Designated Extension States:
BA ME
Designated Validation States:
KH MA MD TN

(30) Priority: 01.06.2017  GR 20170100251

(71) Applicants:
• Aristotle University of Thessaloniki - Elke
  54636 Thessaloniki (GR)

• Alexander Technological Educational
  Institute of Thessaloniki
  57400 Thessaloniki (GR)

(72) Inventors:
• MITRAKAS, Manassis
  55132 Thessaloniki (GR)
• BANTI, Dimitra
  57200 Lagadas Thessalonikis (GR)
• SAMARAS, Petros
  54454 Thessaloniki (GR)

(74) Representative: Petsis, Christos
  Attorney at Law
  Kyparissias 4-6
  54249 Thessaloniki (GR)

(54) **METHOD FOR FOULING PREVENTION OF MEMBRANCES IN MEMBRANCE BIOREACTORS**

(57)    The invention relates to a method for fouling prevention of membranes in biological wastewater treatment plants, being remarkable in that it comprises two bioreactors (1, 2) arranged in series, wherein the operating conditions in the bioreactor (1) are adjusted to achieve F/M ratio values between 0,3 and 0,6 kg COD/kg MLSS/d and dissolved oxygen concentration between 0,2 and 1 mg/L for the controlled cultivation of filamentous bacteria allowing an FI ranging between 1 and 4, and conditions in the bioreactor (2) are adjusted to achieve F/M ratio values between 0,01 and 0,1 kg COD/kg MLSS/d, dissolved oxygen concentration between 1,5 and 3 mg/L, and to maintain FI ranging between 1 and 4.

Figure 2

**Description**

**Field of the invention**

The invention is related to a method for biological wastewater treatment with the utilization of membranes, so-called MBRs - membrane bioreactors, which consists in the configuration of two bioreactors in serial connection, where the first bioreactor is maintained at conditions appropriate for the cultivation and control of filamentous bacteria population, favoring the formation of high porosity activated sludge, and resulting therefore, in low trans-membrane pressure TMP, and low reversible membrane fouling, and the second bioreactor is maintained at low sludge loading conditions, i.e. low value of the ratio kg COD/kg microorganisms, which minimizes the soluble microbial products SMP concentration, resulting in the minimization of the permanent membrane fouling.

**Background of the invention**

Conventional biological wastewater treatment represents the main wastewater treatment process, which is based on the use of microorganisms for the removal of the soluble organic compounds, aiming to improve the effluent quality, which is going to be discharged. The benefits of this method include the low operating cost, the efficient removal of organic and inorganic nutrients and the flexibility for treating wastewater with variable composition. Conventional biological wastewater treatment includes a biological treatment reactor followed by a sedimentation tank for the separation of microorganisms from the aqueous phase. One of the most significant problems thereof is the presence of filamentous bacteria, which cause bulking and foaming/flotation problems in the activated sludge, resulting in the reduction of the efficiency of sludge separation by sedimentation, and affecting therefore, negatively the effluent quality *(D. Jenkins et al., Lewis publishers, Michigan, (1993)).*

An alternative advanced wastewater treatment method that was developed during the last decades and is growing continually, is the application of membrane bioreactors MBRs. It has been recorded that more than 2,500 MBR plants began their operation worldwide during 2008-2013, with an annual growth rate of 10,5% *(F. Meng et al., Environ. Eng. Sci. 29 (2012) 139-160, H. Lin et al., Journal of Membrane Science 460 (2014) 110-125).* This process combines the biological treatment with filtration aiming at the complete separation of activated sludge microorganisms from the treated wastewater, achieving, therefore, a much higher effluent quality than conventional systems. Furthermore, MBR systems present considerable advantages over the conventional biological process, such as the application of higher volumetric loading rate, less sludge production, reduced footprint, improved ability of nitrogen nitrification, and reduced disinfection requirement of the treated wastewater.

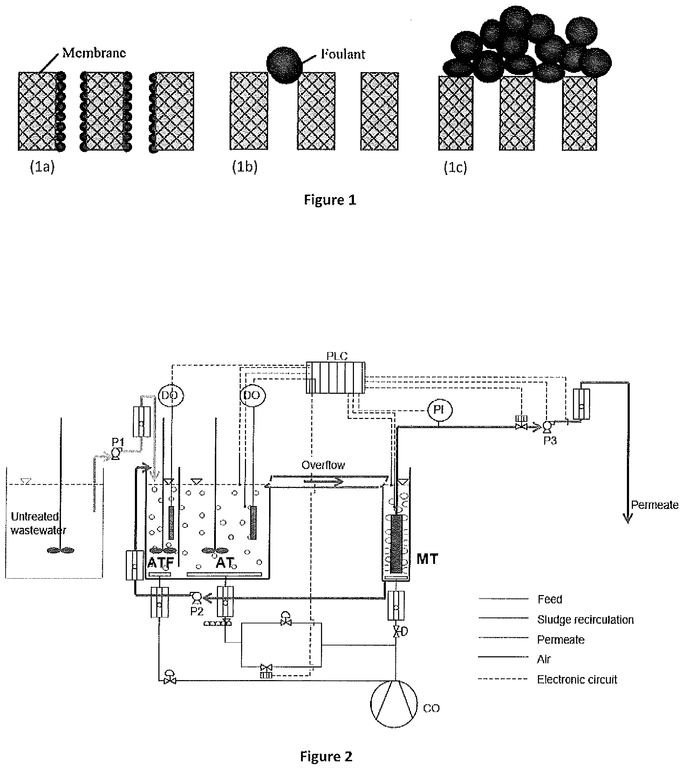

Despite the advantages of the MBR systems mentioned above, membrane fouling remains the main obstacle in their universal application. Membrane fouling is due to interactions between activated sludge suspension and membrane *(F. Meng et al., Water Res. 43 (2009) 1489-1512, H. Lin, Crit. Rev. Environ. Sci. Technol. 42 (2012) 677-740).* More specifically, fouling is caused by the adhesion of activated sludge components in the inner surface of membrane pores shown in Figure 1a, on membrane surface causing complete pore blocking shown in Figure 1b or deposition on the surface in the form of biofilm shown in Figure 1c respectively.

Membrane fouling is classified into reversible and irreversible depending on the particles' adhesion strength at the membrane. The reversible fouling can be treated by physical methods during the MBR operation, such as by application of strong shear forces on the membrane surface achieved by vigorous aeration or by backwash at certain time intervals. The irreversible fouling, however, cannot be removed by physical methods and instead, chemical cleaning of the membrane is required, usually in a special facility outside the MBR system, which implies considerable labor costs (P. Le-Clech et al., J. Membr. Sci. 284 (2006) 17-53).

The membrane fouling results in sharp decrease of the permeate flux, and therefore reduction of system's efficiency, and finally increased operating and maintenance costs. Moreover, the energy required for the scraping of the membrane surface by aeration increases, as well as the backwash frequency, resulting, consequently, in the reduction of membrane's lifetime. Therefore, there is a high interest for the development of prevention techniques of membrane fouling.

Several methods have been studied until today, mainly at research level, in order to prevent membrane fouling. These methods can be categorized into two basic classes: modification of the membrane characteristics and modification of activated sludge characteristics and properties. Some indicative examples are the modification of the membrane surface in order to enhance its hydrophilic characteristics (H. Yu et al., J. Membr. Sci. 310 (2008) 409-417), the use of additional components (V. Iversen et al., J. Membr. Sci. 345 (2009) 21-30), the use of carriers (H. Ngo et al., Bioresource Technol. 99 (2008) 2429-2435), and the granulation of sludge (X. Li et al., Sep. Purif. Technol. 46 (2005) 19-25).

In addition, patent publication US00698.2037B2 related to membrane fouling prevention presents the use of carriers with multiple pores, which are placed inside the membrane bioreactor and contribute to fouling prevention. The document US20080277340A1 presents an MBR system which controls and regulates the flow of aeration for membrane scraping, the duration of membrane relax and filtration phase, as a function of transmembrane pressure TMP, contributing to the optimization of filtration.

However, the optimization of membrane fouling prevention methods in MBR systems still remains an open research field. This field has hardly been investigated towards the manipulation of activated sludge microbial populations. The current innovation is based on the manipulation of a particular microbial population, the filamentous bacteria, in order to prevent membrane fouling in MBR systems. The filamentous bacteria population is determined by the term "filamentous index - FI" (D. Eikelboom, IWA Publishing (2000)). Filamentous index varies at a scale from the value 0 (zero), which refers to the absence of filamentous bacteria, to the value of 5 that is defined by greater filamentous bacteria population compared to the sludge bioflocs population. Filamentous index is defined by comparison of the microscopic images of sludge with the reference microscopic images that corresponds to the 5 FI levels. Between the levels of the filament index there is one order of magnitude difference in filamentous population.

The first researchers who studied the effect of filamentous bacteria and therefore the effect of bulking sludge in MBR systems were I. Chang et al., Sep. Sci. Technol. 34 (1999) 1743-1758, who observed that bulking sludge affected the flocs' morphology and increased the membrane fouling rate. This research continued later in more details by F. Meng et al., J. Membr. Sci. 272 (2006) 161-168, F. Meng et al., J. Membr. Sci. 285 (2006) 159-165 and F. Meng et al., J. Membr. Sci. 305 (2007) 48-56, who found that the filamentous bacteria population overgrowth, associated with the Filamentous Index (FI) increase from 2 to 5, resulted in significant problems in membrane filtration capacity. An additional interesting result found by these research studies, was that, membrane filtration capacity was improved at medium concentrations of filamentous bacteria corresponding to an index FI = 2. However, the duration of these experiments was rather short and they were focused in filterability tests that are associated with the reversible membrane fouling. Furthermore, the investigation was not extended neither to the study of permanent membrane fouling nor to large scale MBR systems. J. Li et al., Sep. Purif. Technol. 59 (2008) 238-243 observed that although the increase of filamentous bacteria in mixed liquor resulted to change of flocs morphology, this increase was not the main reason of the increase of membrane fouling rate. The researchers pointed out that the parameter that was mainly responsible for the fouling increase was the uncontrolled increase of filamentous bacteria population and of the FI index respectively.

Thereafter, J. Pan et al., Journal of Membrane Science 349 (2010) 1-2, 287-294 operated an MBR system with abundant filamentous bacteria cultures, and verified that filamentous overgrowth caused increased irreversible membrane fouling, along with an increase of the SMP concentration (145 mg/L), that explained the high membrane fouling rate. Therefore, they added an aerobic selector prior to the membrane bioreactor in order to account for the bulking sludge problem. Finally, they achieved to reduce filamentous bacteria and the activated sludge to return to normal mode, with no bulking structure, while the membrane filtration rate was improved compared to the MBR with bulking sludge.

Finally, the research study by Z. Wang et al., Chem. Eng. J. 158 (2010) 608-615 justified a few of the conclusions of *Meng et al., 2006 a, b* and *Meng et al., 2007. Wang et al., 2010* identified for the first time, that filamentous bacteria under specific conditions have the potential to improve the membrane filtration in a continuous MBR. They compared two identical MBR systems with normal and bulking sludge respectively. According to their research, it was found that the MBR system with the bulking sludge, featured better filtration characteristics and reduced reversible membrane fouling compared to the identical MBR system with normal sludge, despite the filamentous abundance. However, a closer look at these results reveals that the Sludge Volume Index (SVI) was varying at values of 140 $\pm$40 mL/g, and therefore the MBR system did not actually contain abundant filamentous microbes, but they ranged at medium levels, causing mild sludge bulking. The conclusion of non-abundance of filamentous bacteria is, also, justified by the optical microscopy observation that was presented. Moreover, the FI and SVI indexes were not recorded as a function of time at the bulking sludge MBR, in order to give a clear correlation between the filamentous population and TMP. Furthermore, the synthetic wastewater used in this research had low nutrient content, as efforts were taken to simulate an alcohol refinery wastewater. Therefore, several queries may arise regarding the growth pattern and the activity of filamentous bacteria in MBRs treating real wastewater. However, the most important observation, is that the TMP was not stabilized at low values for a long time in the bulking sludge MBR. According to the results of this work, TMP showed upward trends fluctuating around 3 to 12 kPa during a period of 55 d, resulting in 3 membrane backwashes. Finally, the SMP concentration in this system with slight bulking sludge, was high, reaching up to 191 mg/L, which resulted in an increased rate of irreversible - permanent membrane fouling.

Concluding, the studies related to the presence of filamentous bacteria in the activated sludge bioreactors, were primarily focused to the control and reduction of filamentous in line with the concept applied to conventional biological treatment systems. At the same time, it was found that a low to moderate growth of filamentous bacteria can improve the filtration in membrane bioreactors reducing the reversible fouling. However, the buildup of irreversible fouling was ignored, in spite the fact that it constitutes the most significant problem in membrane fouling, as the only target was always the reduction of filamentous population.

According to the literature review of Barker and Stuckey, Wat. Res. 33:14 (1999) 3063-3082, the soluble microbial products SMP are produced in concentrations proportional to biomass concentration in the activated sludge mixed liquor, because during cell disintegration organic components are revealed in the mixed liquor. As a result, the F/M loading increase (ratio of food mass in kg COD to kg of microorganisms (MLSS) per day) and biomass increase result to SMP increase. The researchers found an optimum F/M range of 0,3-1.2 kg COD/kg MLSS/d, where the SMP concentration is quite constant. A change of the F/M ratio beyond this range is associated to a significant SMP increase. Jang et al., Desalination 202 (2006) 90-98, later confirmed that the F/M ratio increase causes an increase of soluble components' concentration in the mixed liquor.

Meanwhile, Jang et al., Desalination 202 (2006) 90-98 found that the increase of the F/M ratio increases the extracellular polymeric substances content (EPS). This finding was confirmed later by L. Dvorak et al., Bioresour. Technol. 102 (2011) 6870-6875.

Regarding the correlation of SMP with membrane fouling the following conclusions have been conducted. Trussell et al., 40:14 (2006) 2675-2683 found that the SMP concentration is directly related to the membrane fouling rate. Jang et al., Desalination 202 (2006) 90-98 found that a fraction of COD of about 83-91% at permeate of the examined MBR system was composed of SMPs. Therefore, the SMPs are those substances which can pass through the membrane pores and these products are potentially gradually adhering in the membrane pore surface, resulting to irreversible fouling. L. Dvorak et al., Bioresour. Technol. 102 (2011) 6870-6875 confirmed that the SMPs are retained by the membrane and thus, are responsible for the irreversible fouling buildup.

Finally, regarding the correlation between the F/M ratio and membrane fouling, *Trussell et al., 40:14 (2006) 2675-2683* concluded that the 4-fold increase of the F/M loading caused 20-fold increase of the membrane fouling rate. Therefore, by maintaining low SMP concentrations during an MBR operation, low membrane fouling is ensured, resulting to lower operating costs.

According to the above analysis, it is clear that the effects of the filamentous bacteria presence in MBR systems are conflicting. This fact has the following explanation. All research studies took place in a one-stage bioreactor, aiming mainly to the control of filamentous bacteria growth. The use of a one stage bioreactor presents significant drawbacks related to the presence of filamentous bacteria. More specifically, the filamentous bacteria growth is associated to two requirements, i.e. F/M ratio greater than 0.3 kg COD/kg MLSS/d, combined with dissolved oxygen concentration lower than 1 mg/L. Nevertheless, the establishment of these conditions in the one-stage -biological wastewater treatment reactor does not allow for the efficient control of filamentous bacteria population and results in the increase of SMP concentration to high values, the deterioration of both reversible and irreversible membrane fouling and, therefore, to the significant increase of operating costs. Nevertheless, a method for the control and adjustment of filamentous population at certain concentrations for extended operation times has not been proposed, aiming to reduce both reversible and irreversible membrane fouling to very low levels.

**Prior Art**

As to XP026026952 / Y. Meng et al., 2009, Recent advances in membrane bioreactors (MBRs): Membrane fouling and membrane material, it is a review article that summarizes the results of published articles that describe the parameters affecting membrane fouling, without, however, defining the optimal parameters for filamentous bacteria cultivation, notably (0.2 mg/L < DO < 1 mg/L in combination with 0.3 kg COD/kg MLSS < F/M <0.6 kg COD/kg MLSS), as well as the parameters that can stabilize filamentous bacteria concentration (0.01 kg COD/kg MLSS < F/M < 0.1 kg MLSS and 1.5 mg/L < DO <3 mg/L), parameters that reduces the reversible and permanent membrane fouling as it is described detailed in the introduction of the document under evaluation.

Regarding XP022346408 / A Khor et al, 2007, 'Biofouling development and rejection enhancement in long SRT MF membrane bioreactor', it reveals an MBR system with two biological stages (COD, N) that the 1st "COD-tank" with DO>3mg/L is used to remove the dissolved organic matter, and the 2nd "N-tank" with DO < 0.5 mg/L, 1 min aeration and 10 min without aeration is used as a denitrification tank. This is a classical wastewater treatment process including the incorporation of denitrification step after the organic matter removal process. This choice is a technological fiction, since the denitrification process requires excess of organic matter and for this reason precedes to main biological treatment in all wastewater treatment plants. Furthermore, the proposed MBR does not produce filamentous microorganisms nor regulate their concentration, while the MBR layout is not used to reduce membrane fouling. In conclusion, this document is not related to the aimed matter.

JP2015020150A of Kurita Water Ind Ltd, is directed to a Method for treating organic waste water biologically. This document is focused on the optimization of biological wastewater treatment by combining two in series aerobic bioreactors and a membrane tank, which mainly aims to achieve a TOC concentration in the treated wastewater of less than 1 mg/L (Fig. 2). In fact, the 1st stage 10b contains carrier material for the attachment of microorganisms (MBBR), while the classical biological wastewater treatment is carried out in the 2nd stage 12a, where the recirculation of activated sludge is also added. Regarding the reduction of reversible fouling of membrane, the membrane "scraping" method is used by application of various materials ranging in 0.1 - 10 mm and creating in the filtration tank conditions of fluid-suspension of solids. Moreover, this article does not comment & not include the effect of the proposed process on the mechanism of permanent membrane fouling, which is probably the most significant problem.

It is clear that the use of two bioreactors in series leads to operation of the 1st stage at higher F/M ratio, while the partially processed effluent of the 1st stage favors a significantly lower F/M ratio in the 2nd stage, which in turn results in improved effluent quality. For this reason, the two-stage bioreactors in said document JP2015020150A have equal operational volumes. Furthermore, the results of the experiments for SRT>30 days are controversial in terms of membrane fouling (P. Le-Clech et al., Journal of Membrane Science 284 (2006) 17-53).

## Aim of the invention

The present invention aims to address the various issues above by proposing a method for fouling prevention of membranes in membrane bioreactors with regulation of filamentous bacteria population. The present invention thus aims to address the need identified according to the invention.

## Summary of the invention

The present invention thus proposes a method or process for prevention of membrane fouling in membrane bioreactors, where the biological treatment is carried out in two bioreactors in series. The method according to the present invention is remarkable in that it consists of the following steps: A the process stage of the bioreactor 1, wherein the values of the F/M ratio are adjusted between 0.3 and 0.6 kg COD/kg MLSS/d, and wherein the dissolved oxygen concentration is regulated between 0.2 and 1 mg/L; and B the process stage of the bioreactor 2, wherein the values of the F/M ratio are adjusted between 0.01 and 0.1 kg COD/kg MLSS/d and the dissolved oxygen concentration is regulated between 1.5 and 3 mg/L.

It is thus remarkably achieved thanks to the method of the invention the introduction of a bioreactor in the MBR process that cultivates filamentous microorganisms, as well as the determination of parameters that maintain an optimal filamentous concentration, in order to achieve an optimal activated sludge porosity, which in turn results in TMP reduction and therefore in reduction of energy cost for the wastewater filtration.

In addition, the low F/M value in the second bioreactor arranged in series, mainly contributes to the stabilization of filamentous population and additionally maintains the concentration of soluble microbial products (SMP) low. However, in this case, the significantly -even most- important feature of activated sludge is the high porosity of biofilm due to filamentous microorganisms, which covers the membrane and contributes thus to the rejection - not approach to the membrane - of a significant part of SMP-carbohydrates, which are the main components creating permanent membrane fouling.

According to a more particular embodiment of the invention, there is proposed a biomass concentration in both bioreactors ranging between 3 and 8 kg MLSS/m$^3$.

It is to be considered that the design of a wastewater treatment plant incorporates certain operating limits that are not unlimited. In this respect, it is clarified herewith that:

- the desired concentration of filamentous bacteria is achieved by maintaining the F/M ratio in the bioreactor 1 between 0.3 and 0.6 kg COD / kg MLSS/d ;
- in bioreactor 2 the F/M ratio is ranging between 0.01 and 0.1 kg COD/kg MLSS/d ; and
- the biomass concentration in the bioreactors should be between 3 and 8 kg MLSS/m$^3$. The abovementioned operating limits of the bioreactors allow a plant to operate in a range greater than 60% relative to the design nominal flow (Q $\pm$ 0,6Q) and the organic load (F $\pm$ 0,6F), which means that it can be operate under a variety of conditions.

According to a yet more particular embodiment of the invention, filamentous index is ranging between 1 and 4, of 0 < FI < 5 scale, where the value 0 indicates absence of filamentous bacteria while the value 5 is defined by greater filamentous bacteria population compared to the sludge bioflocs population, according to the standard measurement method (D. Eikelboom, IWA Publishing (2000)).

Another aspect of the invention is its application of the said method for the construction of new biological treatment plants for the treatment of domestic and industrial wastewaters, using membranes with reduced fouling rate.

Yet another aspect of the present invention is the method's Application for the modification of the operation of existing membrane bioreactors' plants for the optimization of their efficiency and the reduction of the membranes fouling rate.

The present invention also relates to an Application of the method for the modification of existing Moving Bed Biofilm Reactor (MBBR) for the optimization of their efficiency and reduction of the fouling rate. It is further elucidated herewith that the modification required in existing MBR plants is to separate the bioreactor into two chambers according to the criteria defined above in main embodiment according to the invention.

A still further aspect of this invention is to provide an Application of the method for the upgrade of existing plants, operating as conventional activated sludge systems to membrane bioreactors plants, with reduced membrane fouling rate and production of high quality effluent.

In short, there is thus provided thanks to the invention a method for fouling prevention of membranes in membrane bioreactors with regulation of filamentous bacteria population. To summarize, it is understood that:

the application of two bioreactors in series is not remarkable as such. It is established that the application of two bioreactors in series results in the operation of a first stage with higher F/M ratio, while the partially treated outflow of the first stage, implies a significantly lower F/M ratio in the second stage, having as a result a better effluent quality; the better effluent quality as well as the high SRT values (> 30 days) do not insure conditions of membrane fouling reduction; and

On the other hand, large SRT values increase the viscosity of activated sludge resulting in increased TMP and of reversible fouling, as well as of permanent one. *(*P. Le-Clech et al., Journal of Membrane Science 284 (2006) 17-53*;* A. Pollice et al., Journal of Membrane Science 317 (2008) 65-70*)*.

Further features of the invention are defined in corresponding sub-claims below.

It will be noted that The Filamentus index (FI) is determined according to the Eikelboom method (2000).

The measurement unit of MLSS is $kg/m^3$.

It is established that an important feature of activated sludge in this case is the high porosity of biofilm due to filamentous microorganisms, which covers the membrane and contributes thus to the rejection of a significant part of SMP-carbohydrates, which are the main components creating permanent membrane fouling *(*D. Banti et a/., Separation and Purification Technology, 202 (2018) 119-129, doi.org/10.1016/j.seppur.2018.03.045*)*.

Some exemplary embodiments of the present invention are described more in detail in conjunction with the accompanying drawings. It should be noted that the embodiments in this invention and features in the embodiments can be mutually combined with each other within the scope of the present application.

## Brief description of the figures

The present invention is set out in greater detail in the following detailed description, illustrated in the respective figures and in the exemplary application embodiments in order to be fully understood.

The classical membrane fouling mechanisms are shown in Figure 1. In more details, Figure 1a presents the adhesion of activated sludge components in the inner surface of membrane pores. Figure 1b presents the adhesion of activated sludge components on membrane surface resulting in complete pore blocking. Figure 1c presents the deposition on the surface as biofilm.

Figure 2 shows the flowchart of the membrane bioreactor proposed in the present invention, where the biological treatment is carried out in two bioreactors in series, wherein acronyms ATF stand for aeration tank of high sludge loading rate for filamentous growth (bioreactor 1), AT for aeration tank of low organic load (bioreactor 2), MT for membranes tank, PLC for programmable controller, CO for compressor, DO for dissolved oxygen controller, PI for pressure indicator, P1 for influent wastewater pump, P2 for activated sludge recirculation pump, and P3 for pump for filtration of effluent.

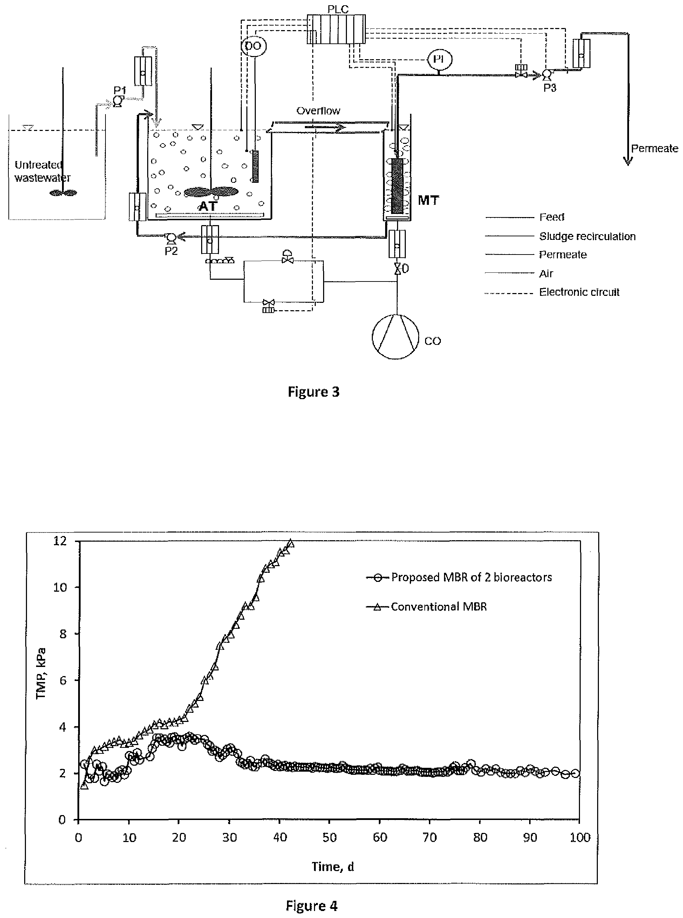

Figure 3 presents the flowchart of a conventional single stage membrane bioreactor including the following acronyms AT: aeration tank, MT: membranes tank, PLC: programmable controller, CO: compressor, DO: dissolved oxygen controller, PI: pressure indicator, P1: influent wastewater pump, P2: activated sludge recirculation pump and P3: pump for filtration of effluent.

Figure 4 presents the graph of transmembrane pressure TMP versus operation time for the proposed MBR of the two bioreactors in series and for the conventional MBR using 15 $L/m^2/h$ filtration flux, wherein the first 15 days constitute the adjustment stage. After that, the filamentous index FI is stabilized between 2 and 3, resulting in decreasing transmembrane pressure for almost three months' operation time, approaching asymptotically the values of TMP observed in a clean membrane at the startup of the operation ($\leq$ 2 kPa).

## Description of the invention

The present invention is related to a design method for the arrangement of two biological wastewater treatment reactors in series shown in Figure 2, which is compared to the single stage conventional bioreactor shown in Figure 3, incorporating two different processes, where the process at the first bioreactor is provided so as to enhance the "cultivation" of filamentous bacteria at F/M ratio values, which range between 0.3 and 0.6 kg COD/kg MLSS/d, where dissolved oxygen concentration is between 0.2 mg/L and 1 mg/L and COD removal efficiency between 80 and 90 %. The process of the second bioreactor is provided so as to operate at F/M ratio values ranging between 0.01 and 0.1 kg COD/kg MLSS/d and where dissolved oxygen concentration is between 1.5 mg/L and 3 mg/L. Furthermore, the biomass loading in both bioreactors in series is provided from 3 to 8 kg $MLSS/m^3$.

The present invention solves the membrane fouling problem with the following main preferred way of implementation. The operating conditions of the first bioreactor regulate the filamentous index FI value between 1 and 4, resulting in the formation of high porosity sludge and in low adhesion capability at the membrane surface. The sludge with such characteristics operates simultaneously as retaining matrix of activated sludge's suspended solids, before they arrive at the membrane surface, enhancing, therefore, further the filtration efficiency.

In more details, according to Kozeny-Carman equation (1) below, porosity $\varepsilon_0$ increase causes large scale decrease of pressure drop $\Delta P$ for a fluid that flows through a fixed bed of solids. Considering, for example, constant the other parameters of the equation (1), for cake porosity $\varepsilon_0 = 0.1$, the corresponding value of the ratio $(1-\varepsilon_0)^2/E_0^3$ is 810, whereas for cake porosity $\varepsilon_0 = 0.2$ the value of the ratio $(1-\varepsilon_0)^2/\varepsilon_0^3$ is 80. This means simply that the cake porosity increase from 0.1 to 0.2 results in one order of magnitude pressure drop reduction - for the same cake thickness , and therefore in energy costs reduction by 10 times.

$$\frac{\Delta P}{L_0} = \frac{k\mu(1-\varepsilon_0)^2}{dg\varepsilon_0^3}\left(\frac{a}{V}\right)^2 v_s \tag{1}$$

where $\Delta P$ is the pressure drop for bed height $L_0$; $\varepsilon_0$ porosity of the bed; $\alpha/V$ represents the particle specific surface, i.e. ratio of particle surface to volume; $v_s$ empty bed velocity; $\mu$ water viscosity; d: water density, and especially k dimensionless Kozeny constant, with k≈5 for normal filtration conditions.

As a result, the high porosity of the sludge in combination with its easier scraping by air, results in membrane operation under significantly lower transmembrane pressure and therefore much lower energy costs. The second bioreactor operating conditions on the one hand inhibit the further growth of filamentous microorganisms' population and on the other hand maintain the soluble microbial products SMP concentration at levels much lower than 20 mg/L limiting the irreversible membrane fouling at minimum level.

Some application examples constituting alternative ways for the application of the invention are given below.

**Example 1 of method's application**

Domestic wastewater with concentration $COD_o = 500$ mg/L and daily flowrate Q = 2,400 $m^3$/day corresponding to a daily organic loading rate equal to 1,200 kg COD/d. The biological treatment process is designed following the optimum biomass concentration for bioreactors of 6 kgMLSS/$m^3$. Domestic wastewater contains mostly biodegradable compounds, and therefore the organic loading removal efficiency in the first bioreactor of filamentous bacteria growth under loading F/M = 0.4 kgCOD/kgMLSS/d is estimated at 85%, whereas the dissolved oxygen concentration is adjusted at 0.5 $\pm$ 0.2 mg/L.

Consequently, the volume of the first bioreactor is estimated to:

$$V_1 = (0.85 \times 1\,200 \text{ kg COD/d}) / (0.4 \text{ kg COD/kg MLSS/d} \times 6 \text{ kg MLSS/m}^3) = 425 \text{ m}^3$$

The hydraulic retention time will be:

$$t_1 = V_1/Q = (425 \text{ m}^3) / (2,400 \text{ m}^3/\text{day}) = 0.177 \text{ days} = 4.25 \text{ hours}$$

According to the method of operation currently proposed herewith, the biomass loading in the second bioreactor will be also 6 kgMLSS/$m^3$, the influent biological loading concentration will be $COD_1 = (1 - 0.85) \times COD_o = 75$ mg/L. In order to minimize the SMP concentration in the wastewater prior its entracne in the membrane filtration tank, the second bioreactor is designed under certain sludge loading value of F/M = 0.04 kg COD/kg MLSS/d and operates with dissolved oxygen concentration of 2.5 $\pm$0.5 mg/L. Therefore, its efficiency will exceed 90%, resulting to a treated effluent COD concentration less than 40 mg/L. The volume of the bioreactor will be:

$$V_2 = (0.9 \times 0.15 \times 1,200 \text{ kg COD/d}) / (0.06 \text{ kg COD/kg MLSS/d} \times 6 \text{ kg MLSS/m}^3) = 450 \text{ m}^3$$

The hydraulic retention time will be:

$$t_2 = V_2/Q = (450 \text{ m}^3) / (2,400 \text{ m}^3/\text{day}) = 0.1875 \text{ days} = 4.5 \text{ hours}$$

This design, on the one hand, allows the controlled "cultivation" of filamentous bacteria in the first bioreactor that results in an FI = 2.5± 0.5 in activated sludge, and, on the other hand, an operation under significantly low sludge loading rates is achieved in the second bioreactor, resulting to the maintenance of soluble microbial products' SMP concentration less than 10 mg/L. In this way, using a membrane filtration flux of 15 $L/m^2/h$, the transmembrane pressure decreases to values less than 2 kPa, i.e. half values of TMP obtained with a conventional membrane bioreactor that operates at 5±1 kPa. Under these conditions, TMP is constant for more than 3 months due to the absence of permanent fouling, as visible in Figure 4.

At this point, it should be noted that a conventional membrane bioreactor treating domestic wastewaters with the same characteristics, it is impossible to culture and control filamentous bacteria population, fact that makes the operation under low sludge load more than necessary in order to reduce membrane fouling, which in turn results in a higher operating cost. These operation conditions are associated to a high fixed cost, due to an increased bioreactor volume, and a high operating cost, due to greater transmembrane pressure. More specifically, a conventional bioreactor requires a maximum loading ratio F/M = 0.1 kg COD/kg MLSS/d, dissolved oxygen concentration adjusted at 2.5±0.5 mg/L and its efficiency is estimated at 95%. Therefore, the volume of the bioreactor will be:

$$V_c = (0.95 \times 1{,}200 \text{ kg COD/d}) / (0.1 \text{ kg COD/kg MLSS/d} \times 6 \text{ kg MLSS/m}^3) = 1{,}900 \text{ m}^3.$$

The hydraulic retention time will be:

$$t = V/Q = (1{,}900 \text{ m}^3) / (2{,}400 \text{ m}^3/\text{day}) = 0.792 \text{ days} = 19 \text{ hours}.$$

COD concentration in treated wastewater will be around 25±5 mg/L, and soluble microbial products SMP at 70±30mg/L.

The transmembrane pressure as a function of time under a membrane filtration flux of 15 $L/m^2/h$ is presented in Figure 4, indicative of the increase of irreversible membrane fouling in conventional membrane bioreactor.

**Example 2 of method's application**

Industrial wastewater with concentration $COD_o$ = 1,700 mg/L and daily influent flowrate Q = 800 $m^3/\text{day}$ corresponding to a daily organic loading equal to 1,360 kg COD/d. The biological treatment process is designed using the optimum biomass concentration for bioreactors of 7 kg $MLSS/m^3$. This particular industrial wastewater is considered to contain easily biodegradable compounds, and therefore in the first bioreactor, where filamentous bacteria grow under loading rate F/M = 0.55 kg COD/kg MLSS/d, the removal efficiency is estimated at 80 %, whereas the dissolved oxygen concentration is adjusted at 0.8±0.2 mg/L. Consequently, the volume of the first bioreactor will be:

$$V_1 = (0.80 \times 1{,}360 \text{ kg COD/d}) / (0.55 \text{ kg COD/kg MLSS/d} \times 7 \text{ kg MLSS/m}^3) = 283 \text{ m}^3.$$

The hydraulic retention time will be:

$$t_1 = V_1/Q = (283 \text{ m}^3) / (800 \text{ m}^3/\text{day}) = 0.354 \text{ days} = 8.49 \text{ hours}.$$

According to the proposed method of operation in the present invention, the biomass concentration in the second bioreactor will also be 7 kg $MLSS/m^3$, the influent organic matter concentration will be $COD_1$ = (1 - 0.80) x $COD_o$ = 340 mg/L. In order to minimize the SMP concentration in the wastewater prior its entrance to the membrane filtration tank, the second bioreactor is designed under the specific loading of F/M = 0.05 kg COD/kg MLSS/d and operates at a dissolved oxygen concentration of 2.5±0.5 mg/L. Therefore, its efficiency will reach up to 95%, having as a result a treated effluent COD concentration less than 20 mg/L. The volume of the bioreactor will be:

$$V_2 = (0.95 \times 0.2 \times 1{,}360 \text{ kg COD/d}) / (0.05 \text{ kg COD/kg MLSS/d} \times 7 \text{ kg MLSS/m}^3) = 738 \text{ m}^3.$$

The hydraulic retention time will be:

$$t_2 = V_2/Q = (738 \text{ m}^3) / (800 \text{ m}^3/\text{day}) = 0.923 \text{ days} = 22.2 \text{ hours.}$$

This design, on the one hand, allows the controlled "cultivation" of filamentous bacteria in the first bioreactor that results in an FI = 3.0±0.5 in activated sludge, and, on the other hand, an operation under significantly low loading rate is achieved in the second bioreactor, resulting in the maintenance of soluble microbial products' SMP concentration considerably less than 20 mg/L. In this way, using a membrane filtration flux of 15 L/m²/h, the transmembrane pressure decreases to 2.5±0.5 kPa, which is kept constant for more than 3 months due to the absence of permanent fouling.

**Example 3 of method's application**

Industrial wastewater with concentration $COD_0$ = 1.200 mg/L and daily flowrate Q = 12.000 m³/day corresponding to a daily organic loading equal to 14.400 kg COD/d. This particular industrial wastewater is considered to contain not easily degradable compounds, and therefore the biological treatment process is designed with biomass loading in the bioreactors equal to 8 kg MLSS/m³. In the first bioreactor, where filamentous bacteria grow, a loading of F/M = 0,3 kg COD/kg MLSS/d is applied. The dissolved oxygen concentration is adjusted at 0.5±0.2 mg/L and the removal efficiency is expected to reach 90%. Consequently, the volume of the first bioreactor will be:

$$V_1 = (0,90 \times 14.400 \text{ kg COD/d}) / (0,3 \text{ kg COD/kg MLSS/d} \times 8 \text{ kg MLSS/m}^3) = 5.400 \text{ m}^3$$

The hydraulic retention time becomes:

$$t_1 = V_1/Q = (5.400 \text{ m}^3) / (12.000 \text{ m}^3/\text{day}) = 0,45 \text{ days} = 10,8 \text{ hours.}$$

According to the method of operation proposed in the present invention, the biomass loading in the second bioreactor will also be 8 kg MLSS/m³, the influent organic matter concentration will be $COD_1$ = (1-0,90) x $COD_0$ = 120 mg/L. In order to minimize the SMP concentration in the wastewater prior its entrance to the membrane filtration tank, and to achieve high efficiency despite the wastewater low biodegradability, the second bioreactor is designed at the specific loading of F/M = 0,04 kg COD/kg MLSS/d and operates at a dissolved oxygen concentration of 2,5±0,5 mg/L. Therefore, its efficiency will reach up to 90%, having as a result a treated effluent COD concentration less than 15 mg/L. The volume of the bioreactor will be:

$$V_2 = (0,9 \times 0,1 \times 14.400 \text{ kg COD/d}) / (0,02 \text{ kg COD/kg MLSS/d} \times 8 \text{ kg MLSS/m}^3) = 8.100 \text{ m}^3$$

The hydraulic retention time will be:

$$t_2 = V_2/Q = (5.400 \text{ m}^3) / (12.000 \text{ m}^3/\text{day}) = 0,675 \text{ days} = 16,2 \text{ hours.}$$

This design, on the one hand, allows the controlled "cultivation" of filamentous bacteria in the first bioreactor that results in an FI = 1,5±0,5 in activated sludge, and, on the other hand, an operation under significantly low loading is achieved in the second bioreactor, resulting to the maintenance of soluble microbial products' SMP concentration considerably less than 10 mg/L. In this way, using a membrane filtration flux of 15 L/m²/h, the transmembrane pressure decreases to 3±0,5 kPa, which is kept constant for more than 3 months due to the absence of permanent fouling.

**Claims**

1. Method for preventing membrane fouling in membrane bioreactors during biological wastewater treatment with a set of two biological wastewater bioreactors, **characterized in that** the biological treatment is carried out in said two bioreactors, which are mutually arranged in series, wherein said method comprises two different processes:

   A. a process stage at the first bioreactor (1), wherein the values of the F/M ratio [ratio of food mass in kg COD to kg of microorganisms (MLSS) per day] are adjusted between 0,3 and 0,6 kg COD/kg MLSS/d, and where the dissolved oxygen concentration is regulated between 0,2 and 1 mg/L, and
B. the process stage of the second bioreactor (2), wherein the values of the F/M ratio are adjusted between 0,01 and 0,1 kg COD/kg MLSS/d and the dissolved oxygen concentration is regulated between 1,5 and 3 mg/L.

2. Method according to claim 1, **characterized in that** biomass concentration in both bioreactors (1, 2) ranges between 3 and 8 kg MLSS/m.

3. Method according to claim 2, **characterized in that** filamentous index (FI) is ranging between 1 and 4 of 0 < FI < 5 scale, where the value 0 indicates absence of filamentous bacteria while the value 5 is defined by greater filamentous bacteria population compared to the sludge bioflocs population, according to the standard measurement method.

4. Method according to one of the preceding claims 1 to 3, **characterized in that** it is applied for the construction of new biological treatment plants for the treatment of domestic and industrial wastewaters with membranes, wherein the fouling rate will be reduced compared to the expected fouling rate for the case of non-implementation.

5. Method according to one of the claims 1 to 3, **characterized in that** it is applied for modification of existing MBR plants by separation of bioreactor in two chambers as defined in claims 1 resp. 2, thus diminishing the membranes fouling rate and increasing the filtration efficiency.

6. Method according to one of the preceding claims 1 to 3, **characterized in that** it is applied for the modification of existing Moving Bed Biofilm Reactors (MBBR) for the optimization of the efficiency of the membranes filtration and reduction of their fouling rate.

7. Method according to one of the preceding claims 1 to 3, **characterized in that** it is applied for the upgrade of existing plants, operating as conventional activated sludge systems to membrane bioreactors plants, with reduced membrane fouling rate compared to the expected fouling rate for the case of non-implementation and production of effluent with very low values of BOD, COD and TSS and therefore of high quality.

**Figure 1**

**Figure 2**

Figure 3

Figure 4

**EUROPEAN SEARCH REPORT**

Application Number

EP 18 17 5597

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | MENG F ET AL: "Recent advances in membrane bioreactors (MBRs): Membrane fouling and membrane material", WATER RESEARCH, ELSEVIER, AMSTERDAM, NL, vol. 43, no. 6, 1 April 2009 (2009-04-01), pages 1489-1512, XP026026952, ISSN: 0043-1354, DOI: 10.1016/J.WATRES.2008.12.044 [retrieved on 2009-01-03] * table 3 * | 1,3-7 | INV. B01D65/08 C02F3/12 |
| T | BANTI DIMITRA C ET AL: "An innovative bioreactor set-up that reduces membrane fouling by adjusting the filamentous bacterial population", JOURNAL OF MEMBRANE SCIENCE, ELSEVIER BV, NL, vol. 542, 15 August 2017 (2017-08-15), pages 430-438, XP085189506, ISSN: 0376-7388, DOI: 10.1016/J.MEMSCI.2017.08.034 | 1-7 | |
| | | | TECHNICAL FIELDS SEARCHED (IPC) |
| A | KHOR ET AL: "Biofouling development and rejection enhancement in long SRT MF membrane bioreactor", PROCESS BIOCHEMISTRY, ELSEVIER LTD, GB, vol. 42, no. 12, 15 November 2007 (2007-11-15), pages 1641-1648, XP022346408, ISSN: 1359-5113, DOI: 10.1016/J.PROCBIO.2007.09.009 * figure 1 * | 1,2 | B01D C02F |
| Y | JP 2015 020150 A (KURITA WATER IND LTD) 2 February 2015 (2015-02-02) | 1,3-7 | |
| A | * paragraphs [0025], [0036]; example 2 * | 2 | |

-/--

The present search report has been drawn up for all claims

| Place of search | Date of completion of the search | Examiner |
|---|---|---|
| Munich | 24 October 2018 | Goers, Bernd |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

page 1 of 2

| | Europäisches Patentamt |
| European Patent Office |
| Office européen des brevets |

**EUROPEAN SEARCH REPORT**

Application Number

EP 18 17 5597

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | EP 1 647 530 A1 (ITT MFG ENTERPRISES INC [US]) 19 April 2006 (2006-04-19) * paragraph [0052]; examples * ----- | 1,2 | |
| A | JP 2016 123920 A (ORGANO KK) 11 July 2016 (2016-07-11) * paragraphs [0030], [0042] * ----- | 1,2 | |
| A | CN 106 745 701 A (HUADIAN WATER ENG CO LTD) 31 May 2017 (2017-05-31) * paragraph [0008] - paragraph [0013] * ----- | 1,2 | |
| | | | **TECHNICAL FIELDS SEARCHED (IPC)** |

The present search report has been drawn up for all claims

| Place of search | Date of completion of the search | Examiner |
|---|---|---|
| Munich | 24 October 2018 | Goers, Bernd |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons
& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 18 17 5597

This annex lists the patent family members relating to the patent documents cited in the above-mentioned European search report.
The members are as contained in the European Patent Office EDP file on
The European Patent Office is in no way liable for these particulars which are merely given for the purpose of information.

24-10-2018

| Patent document cited in search report | | Publication date | Patent family member(s) | | Publication date |
|---|---|---|---|---|---|
| JP 2015020150 | A | 02-02-2015 | JP 6136699 B2<br>JP 2015020150 A | | 31-05-2017<br>02-02-2015 |
| EP 1647530 | A1 | 19-04-2006 | AT 524419 T<br>EP 1647530 A1<br>US 2006081534 A1<br>US 2006213831 A1<br>US 2007138070 A1 | | 15-09-2011<br>19-04-2006<br>20-04-2006<br>28-09-2006<br>21-06-2007 |
| JP 2016123920 | A | 11-07-2016 | NONE | | |
| CN 106745701 | A | 31-05-2017 | NONE | | |

EPO FORM P0459

For more details about this annex : see Official Journal of the European Patent Office, No. 12/82

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 006982037 B2
- US 20080277340 A1
- JP 2015020150 A

### Non-patent literature cited in the description

- **F. MENG et al.** *Environ. Eng. Sci.,* 2012, vol. 29, 139-160
- **H. LIN et al.** *Journal of Membrane Science,* 2014, vol. 460, 110-125
- **F. MENG et al.** *Water Res.,* 2009, vol. 43, 1489-1512
- **H. LIN.** *Crit. Rev. Environ. Sci. Technol.,* 2012, vol. 42, 677-740
- **P. LE-CLECH.** *J. Membr. Sci.,* 2006, vol. 284, 17-53
- **H. YU.** *J. Membr. Sci.,* 2008, vol. 310, 409-417
- **V. IVERSEN.** *J. Membr. Sci.,* 2009, vol. 345, 21-30
- **H. NGO et al.** *Bioresource Technol.,* 2008, vol. 99, 2429-2435
- **X. LI et al.** *Sep. Purif. Technol.,* 2005, vol. 46, 19-25
- **D. EIKELBOOM.** filamentous index - FI. IWA Publishing, 2000
- **I. CHANG et al.** *Sep. Sci. Technol.,* 1999, vol. 34, 1743-1758
- **F. MENG et al.** *J. Membr. Sci.,* 2006, vol. 272, 161-168
- **F. MENG et al.** *J. Membr. Sci.,* 2006, vol. 285, 159-165
- **F. MENG et al.** *J. Membr. Sci.,* 2007, vol. 305, 48-56
- **J. LI et al.** *Sep. Purif. Technol.,* 2008, vol. 59, 238-243
- **J. PAN et al.** *Journal of Membrane Science,* 2010, vol. 349, 1-2, 287-294
- **Z. WANG et al.** *Chem. Eng. J.,* 2010, vol. 158, 608-615
- **BARKER ; STUCKEY.** *Wat. Res.,* 1999, vol. 33 (14), 3063-3082
- **JANG et al.** *Desalination,* 2006, vol. 202, 90-98
- **L. DVORAK et al.** *Bioresour. Technol.,* 2011, vol. 102, 6870-6875
- **A KHOR et al.** *Biofouling development and rejection enhancement in long SRT MF membrane bioreactor,* 2007
- **P. LE-CLECH et al.** *Journal of Membrane Science,* 2006, vol. 284, 17-53
- **A. POLLICE et al.** *Journal of Membrane Science,* 2008, vol. 317, 65-70
- **D. BANTI.** *Separation and Purification Technology,* 2018, vol. 202, 119-129